# EUROPEAN PATENT SPECIFICATION

(11) **EP 1 953 952 B1**
(45) Date of publication and mention of the grant of the patent: **27.10.2010**
(21) Application number: 06805131.7
(22) Date of filing: 01.11.2006
(51) Int. Cl.: H04L 12/14

(54) **AN ACCOUNTING METHOD AND AN ACCOUNTING SYSTEM THEREOF**
BUCHHALTUNGSVERFAHREN UND BUCHHALTUNGSSYSTEM DAFÜR
PROCEDE DE COMPTABILITE ET SYSTEME DE COMPTABILITE ASSOCIE

(30) Priority: 03.11.2005 CN 200510115428
(43) Date of publication of application: 06.08.2008
(73) Proprietor: Huawei Technologies Co., Ltd., Longgang District, Shenzhen Guangdong 518129 (CN)
(72) Inventor: ZHANG, Jin, Guangdong 518129 (CN); YUAN, Liping, Guangdong 518129 (CN); QIAN, Tao, Guangdong 518129 (CN); CHEN, Jing, Guangdong 518129 (CN); LI, Chuan, Guangdong 518129 (CN)
(74) Representative: Thun, Clemens
(86) International application number: PCT/CN2006/002930
(87) International publication number: WO 2007/051413

(56) References cited:
- EP-A- 1 296 481
- EP-A- 1 296 489
- WO-A-01/33800
- CN-A- 1 492 645
- CN-A- 1 588 873
- CN-A- 1 610 433
- US-A1- 2004 266 394

## Description

### Field of the Invention

The present invention relates to the technical field of communication, and more particularly to an accounting method and system in a communication system.

### Background of the Invention

As the Internet service has been developed vigorously and the wireless network has been applied widely, world interoperability for microwave access (WiMAX) system, as an IEEE802.16-based wireless metropolitan area network technology, has been applied widely because of its desirable wireless access characteristics. A new issue for the research in this field is how to apply the WiMAX system in mobile subscribers to provide packet service forwarding or routing function between networks and the mobile subscribers effectively.

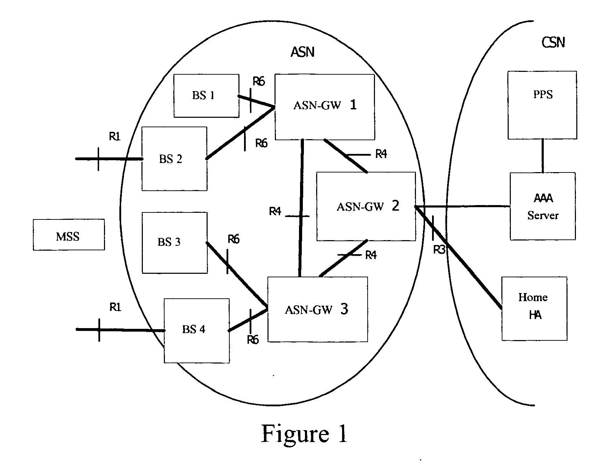

Figure 1 shows an architecture system of the WiMAX accounting network. The functions of each of the network elements in Figure 1 are explained as follows.

Access service network (ASN): the ASN is a collection of network functions for providing wireless access services for a WiMAX terminal, and includes a base station (BS) and an ASN-gateway (ASN-GW).

Functions of the BS include:

providing a Layer 2 (L2) connection between the BS and a mobile subscriber station (MSS), radio resource management, measurement and power control, and data compression and encryption.

Functions of the ASN-GW include:

providing a client function for MSS certification, authorization, and accounting functions;

supporting the network discovery and selection performed by a network service provider (NSP);

providing a relay function (e.g., IP address allocation) of Layer 3 (L3) information for the MSS and radio resource management. In addition, the ASN-GW further provides the following optional functions:

intra-ASN switch;

MSS paging and location management;

tunnel management between the ASN and a connectivity service network (CSN), which is equivalent to foreign agent (FA) in the mobile IP technology; and

visitor location register (VLR).

CSN: CSN provides IP connectivity services for the WiMAX terminal, and DE functions provide by the CSN include:

IP address allocation for the MSS;

Internet access;

Authentication, Authorization, and Accounting (AAA) proxy-paid server or prepaid server (PPS);

subscriber-based authorization control;

a tunnel from the ASN to the CSN, which is equivalent to a home agent (HA) in the mobile IP technology;

accounting of the WiMAX subscribers and settlement between operators, in which the accounting server or the accounting agent is mainly adapted to finish such functions;

providing tunnel between the CSNs during roaming;

inter-ASN handover; and

various WiMAX services (e.g., location-based service, multimedia multicast and broadcasting service, and IP multimedia subsystem service).

MSS: the MSS is mobile subscriber equipment, which is provided for the subscribers to access the WiMAX network.

The BS provided for the MSS to access networks is called a serving BS. As for the MSS accessing networks through a serving BS, the ASN-GW having an R6 interface with the BS is called a serving ASN-GW. For example, in Figure 1, the ASN-GW1 is the serving ASN-GW for the MSS to access networks through BS1 or BS2. The ASN-GW providing an R3 interface between the ASN and an HA of the CSN is called an anchor ASN-GW, for example, ASN-GW2. The anchor ASN-GW2 in Figure 1 is a logic entity, which may exist in the same or different physical entities with the logical entities ASN-GW1, ASN-GW3, and other logical entities in Figure 1. When the anchor ASN-GW and the serving ASN-GW exist in the same physical entity, the interface there-between belongs to an internal interface of a device, which may not necessarily adopt a standard R4 interface.

From the aspect of data plane, a packet service datagram of the downlink MSS is transmitted from the HA of the CSN to the ASN through an R3 interface between the HA and the anchor ASN-GW in the ASN. After entering the ASN, the packet service datagram of the downlink MSS is transmitted to the serving ASN-GW of the MSS through the R4 interface in the ASN, and then, the serving ASN-GW transmits the data of the MSS to the MSS through an R6 interface between the ASN-GW and the BS in the ASN and an R1 interface between the BS and the MSS. Uplink data is delivered from the MSS to the CSN through an opposite path and reaches a peer subscriber. As described above, in the interfaces in the ASN, each service flow of each of the MSSes has corresponding uplink and downlink data paths, and each service flow is established according to the QoS requirements of each service flow and the adopted manner of data path. Once the service is ended, in other words, the service flow is terminated, it is necessary to release the corresponding data path.

In the prior art, the WiMAX accounting manner includes prepaid and postpaid. The accounting manner based on prepaid requires that when the MSS establishes the service flow to access the network service, a prepaid client in the ASN-GW informs the PPS through an AAA server, and the PPS delivers an accounting quota (i.e., duration for the subscriber to access the network service or maximum data volumes that may be transmitted by the subscriber) to the prepaid client. Once the MSS depletes the accounting quota, the prepaid client reports to the PPS, and if the subscriber's account still has a balance, the PPS delivers a next accounting quota to the prepaid client; if the subscriber's account does not have any balance, the PPS informs the prepaid client to cut off the service used by the subscriber. In the accounting manner based on postpaid, once the MSS initiates the access to the network service, the AAA client in the ASN-GW creates a using data record (UDR) of the subscriber, and reports accounting start information to the AAA server. After the subscriber accesses the network service, the AAA client closes the subscriber's UDR, and reports accounting information to the AAA server, and the accounting information includes subscriber identification (ID), duration, data volumes, QoS, and service type (HTTP, FTP, streaming media service, and multimedia short message service, etc) of the service used by the subscriber. As for the accounting technology in the prior art, merely simple types of service information used by the subscriber may be obtained, however, particular application service content information (for example, film ID information or TV channel ID information of the TV programs watched by the subscriber through the streaming media service) can not be obtained. In the manner, it may not charge depending upon the subscriber's particular application content (the charge of different films may be different, and the charge of different TV channels may also be different). Charging according to difference in contents is helpful for enhancing the WiMAX in supporting the content service, and is also helpful for the content service providers to charge the subscribers for the content use through the operators.

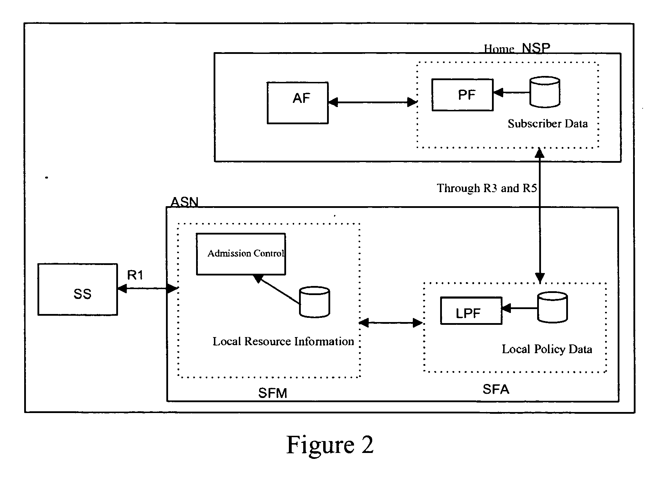

In the protocol NWG-STAGE2, a network structure of the QoS negotiation is defined. Figure 2 shows a network structure of the WiMAX-based QoS negotiation. As shown in Figure 2, the structure includes a service flow authorization (SFA) module and a service flow management (SFM) module. Both of the two modules, the accounting client, and the prepaid client are function modules of the ASN-GW. An application function (AF) entity finishing the function services of the application layer; and a policy function (PF) entity. When the subscriber establishes the service flow to access the network service, the AF sends a resource reservation request message (RR_Request message) to the PF, and the message includes the QoS information required by the application service (for example, network transmission bandwidth, bit error rate, and service type). The PF make a decision according to the best QoS information of the subscriber saved in a subscriber database, and if the QoS information required by the application service is lower than the best QoS of the subscriber, the application service is allowed. The PF sends the RR_Request message to the SFA. The SFA determines to accept the QoS requested by the PF according to a local QoS policy. The SFA sends the RR_Request message to the SFM, and the SFM delivers the QoS information to the AAA client or the prepaid client. The AAA client or the prepaid client reports the QoS information together with other account information to the AAA server or the PPS.

The RR_Request message sent from the AF to the PF and defined in the WiMAX protocol NWG-STAGE2 is shown in the table below:

| **Message** | **Direction** | **Parameter** |
|---|---|---|
| RR-Request | AF-PF | Application ID (AF entity ID) |
| | | Client ID (client ID that requests the application service) |
| | | Transaction ID (transmission channel ID) |
| | | Flow ID (service flow ID) |
| | | Reservation Action (resource reservation action, for example, creation, allowance, activation, modification, and deletion, etc.) |
| | | Direction (direction flag, for indicating uplink or downlink) |
| | | Resource Description (resource description, QoS parameter herein) |
| | | Media Flow Description (media flow description, including source IP address, destination IP address, and port number) |
| | | Media Flow Type (media type, which is mainly the application service type, for example, VoIP, video, PTT (push to talk), and game, etc.) |
| | | Reduced Resources (the reduced resources allowed) |
| | | QoS Priority (priority of QoS) |

The RR_Request message sent from the PF to the SFA and defined in the protocol NWG-STAGE2 is shown in the table below:

| **Message** | **Direction** | **Parameter** |
|---|---|---|
| RR-Request | PF-SFA | SS ID (subscriber station ID, which may be IP address, MAC address, or network access ID) |
| | | Transaction ID (transmission channel ID) |
| | | Flow ID (service flow ID) |
| | | Reservation Action (resource reservation action, for example, creation, allowance, activation, modification, and deletion, etc.) |
| | | Direction (direction flag, for indicating uplink or downlink) |
| | | Resource Description (resource description, QoS parameter herein) |
| | | Media Flow Description (media flow description, including source IP address, destination IP address, and port number) |
| | | Media Flow Type (media type, which is mainly the application service type, for example, VoIP, video, PTT (push to talk), and game, etc.) |
| | | Reduced Resources (the reduced resources allowed) |
| | | QoS Priority (priority of QoS) |

The RR_Request message sent from the SFA to the SFM and defined in the protocol NWG-STAGE2 is shown in the table below:

| **Message** | **Direction** | **Parameter** |
|---|---|---|
| RR-Request | SFA-SFM, SFM-SFA | SS ID (subscriber station ID, which may be IP address, MAC address, or network access ID) |
| | | Transaction ID (transmission channel ID) |
| | | Dot16 Service Flow ID (service flow ID at the MAC layer, which is described in IEEE 802.16) |
| | | Reservation Action (resource reservation action, for example, creation, allowance, activation, modification, and deletion, etc.) |
| | | Direction (direction flag, for indicating uplink or downlink) |
| | | Resource Description (resource description, QoS parameter herein) |
| | | Media Flow Description (media flow description, including source IP address, destination IP address, and port number) |
| | | Media Flow Type (media type, which is mainly the application service type, for example, VoIP, video, PTT (push to talk), and game, etc.) |
| | | Reduced Resources (the reduced resources allowed) |
| | | QoS Priority (priority of QoS) |

Considering the prior art, the subscriber is charged according to the duration, data volumes information, and QoS information of the service used by the subscriber. According to the accounting information, the operator may not get to know the particular content (for example, information about the particular film watched by the subscriber, or information about the particular MP3 downloaded by the subscriber) of the application layer service used by the subscriber. The content service provider may not charge the subscriber for the content service through the operators.

In Document EP-A-1 296489, a mobile communication service control apparatus and method is disclosed. A MGW110 acquires the IP packets of the contents request and response transmitted from a mobile terminal and a provider server, respectively. The Media Gate Way, MGW, measures the quantities of the transmitted IP packets, and outputs the measurement result to a MSA . Also, the MGW restores the contents response from the IP packet transmitted from the provider. The MSA also selects a charging rule used to calculate a communication rate for the requested contents, from among the charging rules produced and managed by the MSM, based on the information about the type of the contents and other information contained in the contents response.

In Document US 2004/266394 A1, a method for extending content aware accounting to a serving GPRS node is disclosed.

### Summary of the Invention

Embodiment of the present invention provides an accounting method and accounting system, so as to solve one or more of the problems of the prior art.

According to an embodiment of the present invention, an accounting method is provided, which includes:
adding an accounting extension parameter in a message, sent from an application function, AF, entity to a policy function, PF, entity, wherein the accounting extension parameter carries application layer content information, wherein the application layer content information is configured in the AF;
adding the accounting extension parameter in a message sent from the PF entity to a service flow authorization, SFA, module;
adding the accounting extension parameter in a message sent from the SFA module to a service flow management, SFM, module;
sending, by the SFM module, the accounting extension parameter to an accounting unit; and
performing, by the accounting unit, accounting according to the application layer content information carried in the accounting extension parameter, wherein the accounting extension parameter comprises an application content ID, an accounting type, and an accounting rate..

Preferably, the accounting unit performs different accounting according to the application layer content information, or delivers an accounting quota according to the application layer content information

Preferably, the accounting extension parameter further includes an accounting-associated ID.

The accounting method includes:

the accounting unit sends information about the accounting extension parameter to an accounting center; and

the accounting center determines the content service used by the subscriber according to the information and performing accounting.

Format of the accounting extension parameter includes an application content ID field, and an accounting type field.

The format of the accounting extension parameter further includes an application content description field.

According to an embodiment of the present invention, an accounting system is further provided, which includes an AF entity, a PF entity, an SFA module, an SFM module, and an accounting unit.
the AF entity configured with application layer content information, is adapted to add an accounting extension parameter in a message, and send the message to the PF entity, wherein the accounting extension parameter carries application layer content information;
the PF entity, is adapted to add the accounting extension parameter in a message, and send the message to the SFA module;
the SFA module, is adapted to add the accounting extension parameter in a message, and send the message to the SFM module;
the SFM module, is adapted to send the accounting extension parameter to the accounting unit; and
the accounting unit, is adapted to perform accounting according to the application layer content information carried in the accounting extension parameter, wherein the accounting extension parameter comprises an application content ID, an accounting type, and an accounting rate.

Through employing the accounting method or accounting system provided by the present invention, the particular content information of the application layer service may be reported to the AAA server or the PPS effectively. The AAA server and the PPS may perform the different accounting according to the application layer service content effectively. In addition, the present invention may be easily implemented, and may make full use of the existing system, and thus, the cost thereof is reduced.

### Brief Description of the Drawings

The following detailed description combined with attached diagrams explains features, aspects and advantages of the embodiments of the present invention.

Figure 1 is an architecture system of the WiMAX accounting network in the prior art; and

Figure 2 is a schematic diagram of the network structure for the WiMAX-based QoS negotiation according to an embodiment of the present invention.

### Detailed Description of the Embodiments

In order to make principles, features, and advantages of the present invention more apparent, technical solutions of the embodiment of the present invention are described below in detail with reference to Table 1 to Table 3. Table 1 shows the RR_Request message sent from the AF to the PF according to the present invention, Table 2 shows the RR_Request message sent from the PF to the SFA according to the present invention, and Table 3 shows the RR_Request message sent from the SFA to the SFM according to the present invention. It may be known from the tables that an accounting extension parameter is added into the resource reservation requests.

The information about the particular content of the service used by the subscriber is saved in the AF (when the subscriber logs into the AF and initiates to use the service on the AF, the AF acquires the information about the particular content of the service and the QoS information required by the service, and sends the acquired information to the PF through the RR_Request message), so the present invention provides a method for adding an accounting extension parameter in the RR_Request message sent from the AF of the WiMAX to the PF, the RR_Request message sent from the PF to the SFA, and the RR_Request message sent from the SFA to the SFM, and the accounting extension parameter includes application layer content information used by the subscriber. The application layer content information is the information about the particular content of the service used by the subscriber, which includes application content ID information and application content description information. The accounting extension parameter may be determined through a negotiation between the operator and the content service provider.

The accounting extension parameter may include an application layer service ID, an accounting associated ID, an accounting manner, and an accounting rate. The accounting associated ID is adapted to indicate a corresponding relation between the relevant resources and the application service content, and especially adapted to provide relevant settlement information among different operators. An accounting device may fill the information in a charging data record and send the charging data record to the accounting center. The accounting center determines the content service consumed by the subscriber according to the information, so as to calculate the subscriber's consumption sum.

In the embodiment of the present invention, the technical problem about the manner of reporting the content information of the application layer service by the AAA client or the prepaid client of the ASN-GW in the WiMAX system has been solved.

**Table 1**

| **Message** | **Direction** | **Parameter** |
|---|---|---|
| RR-Request | AF-PF | Application ID (AF entity ID) |
| | | Client ID (client ID that requests the application service) |
| | | Transaction ID (transmission channel ID) |
| | | Flow ID (service flow ID) |
| | | Reservation Action (resource reservation action, for example, creation, allowance, activation, modification, and deletion, etc.) |
| | | Direction (direction flag, for indicating uplink or downlink) |
| | | Resource Description (resource description, QoS parameter herein) |
| | | Media Flow Description (media flow description, including source IP address, destination IP address, and port number) |
| | | Media Flow Type (media type, which is mainly the application service type, for example, VoIP, video, PTT (push to talk), and game, etc.) |
| | | Reduced Resources (the reduced resources allowed) |
| | | QoS Priority (priority of QoS) |
| | | Accounting Extension (accounting extension parameter, which is adapted to save the application layer content information and includes, but not limited to, the content ID and the content description, and the particular content is determined through the negotiation between the content service provider and the operator.) |

**Table 2**

| **Message** | **Direction** | **Parameter** |
|---|---|---|
| RR-Request | PF-SFA | SS ID (subscriber station ID, which may be IP address, MAC address, or network access ID) |
| | | Transaction ID (transmission channel ID) |
| | | Flow ID (service flow ID) |
| | | Reservation Action (resource reservation action, for example, creation, allowance, activation, modification, and deletion, etc.) |
| | | Direction (direction flag, for indicating uplink or downlink) |
| | | Resource Description (resource description, QoS parameter herein) |
| | | Media Flow Description (media flow description, including source IP address, destination IP address, and port number) |
| | | Media Flow Type (media type, which is mainly the application service type, for example, VoIP, video, PTT (push to talk), and game, etc.) |
| | | Reduced Resources (the reduced resources allowed) |
| | | QoS Priority (priority of QoS) |
| | | Accounting Extension (accounting extension parameter, which is adapted to save the application layer content information and includes, but not limited to, the content ID and the content description, and the particular content is determined through the negotiation between the content service provider and the operator.) |

**Table 3**

| **Message** | **Direction** | **Parameter** |
|---|---|---|
| RR-Request | SFA-SFM, SFM-SFA | SS ID (subscriber station ID, which may be IP address, MAC address, or network access ID) |
| | | Transaction ID (transmission channel ID) |
| | | Dot16 Service Flow ID (service flow ID at the MAC layer, which is described in IEEE 802.16) |
| | | Reservation Action (resource reservation action, for example, creation, allowance, activation, modification, and deletion, etc.) |
| | | Direction (direction flag, for indicating uplink or downlink) |
| | | Resource Description (resource description, QoS parameter herein) |
| | | Media Flow Description (media flow description, including source IP address, destination IP address, and port number) |
| | | Media Flow Type (media type, which is mainly the application service type, for example, VoIP, video, PTT (push to talk), and game, etc.) |
| | | Reduced Resources (the reduced resources allowed) |
| | | QoS Priority (priority of QoS) |
| | | Accounting Extension (accounting extension parameter, which is adapted to save the application layer content information and includes, but not limited to, the content ID and the content description, and the particular content is determined through the negotiation between the content service provider and the operator.) |

As shown in Table 1 to Table 3, in the embodiment of the present invention, an Accounting Extension parameter is added into the RR_Request message sent from the AF to the PF, the RR_Request message sent from the PF to the SFA, and the RR_Request message sent from the SFA to the SFM. The accounting extension parameter is adapted to save the application layer service content information obtained from the AF, and the particular information format is defined by the operator and the content provider. For example, the format may be defined to include an application content ID (length may be defined as four bytes, for distinguishing different contents and positioning a single content service on the AF accurately), an application content description (service text information for describing the particular content, for example, film name, URL information of the downloaded file, and this parameter is optional), an accounting type (generally referring to charging according to the duration, charging according to the volumes, or charging according to the number of using services), and an accounting rate, in which a certain amount of function use fee is charged according to the accounting rate (referring to the payment for using a particular content service).

In addition, the parameter defined by the operator and the content provider further includes an accounting-associated ID, for indicating the corresponding relation between the relevant resource and the application service content, and providing relevant settlement information between the operator and the content provider.

It should be noted that, the above format is merely taken as an example, and persons skilled in the art may easily get other applicable formats. The parameter is copied, by the PF, to the RR_Request message sent to the SFA. Similarly, the parameter is copied, by the SFA, to the RR_Request message sent to the SFM.

Although in this embodiment, the parameter is in the same format in each of the RR_Request messages because the parameter is copied there-among, persons skilled in the art shall know that, the parameter may be in a different format in each of the RR_Request messages depending upon the actual requirements. The SFM extracts the parameter from the RR_Request message sent from the SFA, and delivers the parameter to an accounting device (the accounting device herein is a generalized concept, and refers to an accounting device or a collection of accounting devices, for example, including accounting client/prepaid client, AAA server/PPS). Particularly, the parameter is delivered to the accounting client or the prepaid client on the ASN-GW. The accounting client fills the information into the UDR in the original form. When the subscriber starts to use the service, the accounting client fills the accounting extension parameter into an accounting request message and sends the accounting request message to the AAA server. The AAA server performs accounting according to the service content information carried in the accounting extension parameter, for example, performs accounting on the corresponding rates according to different application layer service IDs and the accounting-associated IDs. When the subscriber starts to use the service, the prepaid client fills the accounting extension parameter into the accounting request message in the original form, and sends the accounting request message to the PPS. Then, the PPS delivers the accounting quota according to the content information in the accounting extension parameter.

By adding the accounting extension parameter in the RR_Request message, the ASN-GW may report the particular content information of the application layer service to the AAA server or the PPS effectively. The AAA server and the PPS may perform the different accounting depending upon the application layer service content effectively.

According to an embodiment of the present invention, an accounting system is further provided, which includes an AF entity, a PF entity, an SFA module, an SFM module, and an accounting unit.

The AF entity configured with application layer content information, is adapted to send the relevant application layer content information to the SFM module.

The SFM module, is adapted to send the application layer content information to the accounting unit.

The accounting unit, is adapted to perform accounting according to the application layer content information and a predefined accounting policy.

The PF entity, is adapted to determine the QoS for the service used by the subscriber according to the message delivered by the AF and the subscriber's subscription data (including information about the QoS allowed to be used by the subscriber) and send the policy information to the SFA module.

The SFA module located in the ASN-GW, is adapted to receive the QoS information delivered from the PF entity, perform the policy authorization according to the locally-allocated policy information, and send the authorized policy information to the SFM module in the BS. The SFM module controls the bandwidth for the service flow of the subscriber.

It will be apparent to those skilled in the art that various modifications and variations may be made to the structure of the present invention without departing from the scope of the invention. In view of the foregoing, it is intended that the present invention cover modifications and variations of this invention provided they fall within the scope of the following claims.

## Claims

1. An accounting method comprising:
adding an accounting extension parameter in a message sent from an application function, AF, entity to a policy function, PF, entity, wherein the accounting extension parameter carries application layer content information, and wherein the application layer content information is configured in the AF entity;
adding the accounting extension parameter in a message sent from the PF entity to a service flow authorization, SFA, module;
adding the accounting extension parameter in a message sent from the SFA module to a service flow management, SFM, module;
sending the accounting extension parameter by the SFM module to an accounting unit; and
performing by the accounting unit accounting according to the application layer content information carried in the accounting extension parameter, wherein the accounting extension parameter comprises an application content ID, an accounting type and an accounting rate.

2. The accounting method according to claim 1, **characterized in that** performing by the accounting unit accounting according to the application layer content information comprises:
performing by the accounting unit different accounting according to the application layer content information or
delivering by the accounting unit an accounting quota according to the application layer content information.

3. The accounting method according to claim 1 **characterized in that** the accounting extension parameter further comprises an accounting-associated ID.

4. The accounting method according to claim 1, **characterized in that** performing by the accounting unit accounting according to the application layer content information comprises:
sending by the accounting unit information about the accounting extension parameter to an accounting center; and
determining by the accounting center the content service used by the subscriber according to the information and performing accounting.

5. The accounting method according to claim 1, **characterized in that** the format of the accounting extension parameter comprises an application content ID field, and an accounting type field.

6. The accounting method according to claim 5, **characterized in that** the format of the accounting extension parameter further comprises an application content description field.

7. An accounting system comprising an application function, AF, entity, a policy function, PF, entity, a service flow authorization, SFA, module, a service flow management, SFM, module and an accounting unit **characterized in that**:
the AF entity configured with application layer content information, is adapted to add an accounting extension parameter in a message, and send the message to the PF entity, wherein the accounting extension parameter carries application layer content information;
the PF entity is adapted to add the accounting extension parameter in a message, and send the message to the SFA module;
the SFA module is adapted to add the accounting extension parameter in a message, and send the message to the SFM module;
the SFM module is adapted to send the accounting extension parameter to the accounting unit; and
the accounting unit is adapted to perform accounting according to the application layer content information carried in the accounting extension parameter, wherein the accounting extension parameter comprises an application content ID, an accounting type, and an accounting rate.

8. The accounting system according to claim 7, **characterized in that** the accounting unit is adapted to perform different accounting according to the application layer content information or to deliver an accounting quota according to the application layer content information.

## Patentansprüche

1. Buchhaltungsverfahren, umfassend:
Addieren eines Buchhaltungserweiterungsparameters in einer von einer Anwendungsfunktionsentität AF zu einer Richtlinienfunktionsentität PF gesendeten Nachricht, wobei der Buchhaltungserweiterungsparameter Anwendungsschichtinhaltsinformationen führt und wobei die Anwendungsschichtinhaltsinformationen in der AF-Entität konfiguriert sind;
Addieren des Buchhaltungserweiterungsparameters in einer von der PF-Entität gesendeten Nachricht zu einem Diensteflussautorisierungsmodul SFA;
Addieren des Buchhaltungserweiterungsparameters in einer von dem SFA-Modul zu einem Diensteflussverwaltungsmodul SFM gesendeten Nachricht;
Senden des Buchhaltungserweiterungsparameters durch das SFM-Modul an eine Buchhaltungseinheit und
Durchführen einer Buchhaltung durch die Buchhaltungseinheit gemäß der in dem Buchhaltungserweiterungsparameter geführten Anwendungsschichtinhaltsinformationen, wobei der Buchhaltungserweiterungsparameter eine Anwendungsinhalts-ID, einen Buchhaltungstyp und eine Buchhaltungsrate umfasst.

2. Buchhaltungsverfahren nach Anspruch 1, **dadurch gekennzeichnet, dass** das Durchführen einer Buchhaltung durch die Buchhaltungseinheit gemäß den Anwendungsschichtinhaltsinformationen Folgendes umfasst:
Durchführen einer unterschiedlichen Buchhaltung durch die Buchhaltungseinheit gemäß den Anwendungsschichtinhaltsinformationen oder
Liefern einer Buchhaltungsquote durch die Buchhaltungseinheit gemäß den Anwendungsschichtinhaltsinformationen.

3. Buchhaltungsverfahren nach Anspruch 1, **dadurch gekennzeichnet, dass** der Buchhaltungserweiterungsparameter weiterhin eine buchhaltungsassoziierte ID umfasst.

4. Buchhaltungsverfahren nach Anspruch 1, **dadurch gekennzeichnet, dass** das Durchführen einer Buchhaltung durch die Buchhaltungseinheit gemäß den Anwendungsschichtinhaltsinformationen Folgendes umfasst:
Senden von Informationen über den Buchhaltungserweiterungsparameter durch die Buchhaltungseinheit an ein Buchhaltungszentrum und
Bestimmen des von dem Teilnehmer verwendeten Inhaltsdienstes durch das Buchhaltungszentrum gemäß den Informationen und Ausführen einer Buchhaltung.

5. Buchhaltungsverfahren nach Anspruch 1, **dadurch gekennzeichnet, dass** das Format des Buchhaltungserweiterungsparameters ein Anwendungsinhalt-ID-Feld und ein Buchhaltungstypfeld umfasst.

6. Buchhaltungsverfahren nach Anspruch 5, **dadurch gekennzeichnet, dass** das Format des Buchhaltungserweiterungsparameters weiterhin ein Anwendungsinhaltbeschreibungsfeld umfasst.

7. Buchhaltungssystem umfassend eine Anwendungsfunktionsentität AF, eine Richtlinienfunktionsentität PF, ein Diensteflussautorisierungsmodul SFA, ein Diensteflussverwaltungsmodul SFM und eine Buchhaltungseinheit, **dadurch gekennzeichnet, dass**
die mit den Anwendungsschichtinhaltsinformationen konfigurierte AF-Entität adaptiert ist zum Addieren eines Buchhaltungserweiterungsparameters in einer Nachricht und Senden der Nachricht an die PF-Entität, wobei der Buchhaltungserweiterungsparameter Anwendungsschichtinhaltsinformationen führt;
die PF-Entität ausgelegt ist zum Addieren des Buchhaltungserweiterungsparameters in einer Nachricht und Senden der Nachricht an das SFA-Modul;
das SFA-Modul ausgelegt ist zum Addieren des Buchhaltungserweiterungsparameters in einer Nachricht und Senden der Nachricht an das SFM-Modul;
das SFM-Modul ausgelegt ist zum Senden des Buchhaltungserweiterungsparameters an die Buchhaltungseinheit und
die Buchhaltungseinheit ausgelegt ist zum Durchführen einer Buchhaltung gemäß der in dem Buchhaltungserweiterungsparameter geführten Anwendungsschichtinhaltsinformationen, wobei der Buchhaltungserweiterungsparameter eine Anwendungsinhalts-ID, einen Buchhaltungstyp und eine Buchhaltungsrate umfasst.

8. Buchhaltungssystem nach Anspruch 7, **dadurch gekennzeichnet, dass** die Buchhaltungseinheit ausgelegt ist zum Durchführen einer anderen Buchhaltung gemäß den Anwendungsschichtinhaltsinformationen oder Liefern einer Buchhaltungsquote gemäß den Anwendungsschichtinhaltsinformationen.

## Revendications

1. Procédé de comptabilité comprenant :
l'ajout d'un paramètre de poste de comptabilité dans un message envoyé par une entité de fonction d'application, AF, à une entité de fonction de règle, PF, le paramètre de poste de comptabilité portant des informations de contenu de couche d'application et les informations de contenu de couche d'application étant configurées dans l'entité AF ;
l'ajout du paramètre de poste de comptabilité dans un message envoyé par l'entité PF à un module d'autorisation de flux de service, SFA ;
l'ajout du paramètre de poste de comptabilité dans un message envoyé par le module SFA à un module de gestion de flux de service, SFM ;
l'envoi du paramètre de poste de comptabilité par le module SFM à une unité de comptabilité ; et
l'exécution, par l'unité de comptabilité, d'une comptabilité en fonction des informations de contenu de couche d'application portées dans le paramètre de poste de comptabilité, le paramètre de poste de comptabilité comprenant une ID de contenu d'application, un type de comptabilité.et un taux comptable.

2. Procédé de comptabilité selon la revendication 1, **caractérisé en ce que** l'exécution, par l'unité de comptabilité, d'une comptabilité en fonction des informations de contenu de couche d'application comprend :
l'exécution, par l'unité de comptabilité, d'une comptabilité différente en fonction des informations de contenu de couche d'application ; ou
la délivrance, par l'unité de comptabilité, d'un quota comptable en fonction des informations de contenu de couche d'application.

3. Procédé de comptabilité selon la revendication 1, **caractérisé en ce que** le paramètre de poste de comptabilité comprend en outre une ID associée à la comptabilité.

4. Procédé de comptabilité selon la revendication 1, **caractérisé en ce que** l'exécution, par l'unité de comptabilité, d'une comptabilité en fonction des informations de contenu de couche d'application comprend :
l'envoi, par l'unité de comptabilité, d'informations relatives au paramètre de poste de comptabilité à un centre de comptabilité ; et
la détermination, par le centre de comptabilité, du service de contenu utilisé par l'abonné en fonction des informations et l'exécution de la comptabilité.

5. Procédé de comptabilité selon la revendication 1, **caractérisé en ce que** le format du paramètre de poste de comptabilité comprend un champ d'ID de contenu d'application et un champ de type de comptabilité.

6. Procédé de comptabilité selon la revendication 5, **caractérisé en ce que** le format du paramètre de poste de comptabilité comprend en outre un champ de description de contenu d'application.

7. Système de comptabilité comprenant une entité de fonction d'application, AF, une entité de fonction de règle, PF, un module d'autorisation de flux de service, SFA, un module de gestion de flux de service, SFM et une unité de comptabilité **caractérisé en ce que** :
l'entité AF configurée avec les informations de contenu de couche d'application est adaptée pour ajouter un paramètre de poste de comptabilité dans un message et
envoyer le message à l'entité PF, le paramètre de poste de comptabilité portant des informations de contenu de couche d'application ;
l'entité PF est adaptée pour ajouter le paramètre de poste de comptabilité dans un message et envoyer le message au module SFA ;
le module SFA est adapté pour ajouter le paramètre de poste de comptabilité dans un message, et envoyer le message au module SFM ;
le module SFM est adapté pour envoyer le paramètre de poste de comptabilité à l'unité de comptabilité ; et
l'unité de comptabilité est adaptée pour exécuter une comptabilité en fonction des informations de contenu de couche d'application portées dans le paramètre de poste de comptabilité, le paramètre de poste de comptabilité comprenant une ID de contenu d'application, un type de comptabilité et un taux comptable.

8. Système de comptabilité selon la revendication 7, **caractérisé en ce que** l'unité de comptabilité est adaptée pour exécuter une comptabilité différente en fonction des informations de contenu de couche d'application ou délivrer un quota comptable en fonction des informations de contenu de couche d'application.
